# EUROPEAN PATENT SPECIFICATION

(11) **EP 2 629 456 B1**
(45) Date of publication and mention of the grant of the patent: **28.08.2019**
(21) Application number: 13155377.8
(22) Date of filing: 15.02.2013
(51) Int. Cl.: H04W 8/26, H04L 12/24, H04L 12/26, H04W 16/06, H04W 16/10

(54) **Dynamic release and reclamation of a communication resource provisioned to an access point in a network**
Dynamische Freigabe und Reklamation einer einem Netzzugangspunkt zugeteilten Kommunikationsressource in einem Netzwerk
Libération et récupération dynamique d'une ressource de communication allouée à un point d'accès dans un réseau

(30) Priority: 16.02.2012 US 201213398004
(43) Date of publication of application: 21.08.2013
(73) Proprietor: Comcast Cable Communications, LLC, Philadelphia, PA 19103 (US)
(72) Inventor: Ong, Ivan, Malvern, PA Pennsylvania 19355 (US); Lee, Yiu L., Philadelphia, PA Pennsylvania 19146 (US)
(74) Representative: Mozzi, Matteo

(56) References cited:
- EP-A1- 1 708 088
- EP-A1- 2 391 153
- WO-A1-99/20069
- WO-A2-97/44967
- US-A1- 2008 161 004
- US-A1- 2010 189 073
- US-A1- 2010 246 501

## Description

### BACKGROUND

Availability of network resources, such as bandwidth, control channels, or logical addresses, generally is limited. Even in scenarios in which network resources scale satisfactorily with demand-e.g., increase in spectrum accompanies user demand and network deployment-costs associated with making available such network resources can be burdensome.

US 2008/0161004 A1 relates to a method for involving at least one mobile unit having at least one first session with a base station, including determining at least one activity level associated with said at least one first session and allocating memory to the at least one first session based on the at least one determined activity level.

EP 2391153 A1 relates to a method for dynamic resource partitioning in heterogeneous access point network.

US 2010/189073 A1 discloses a method for IP address management in networks using a proxy based approach in mobile IP telephony.

US 2010/246501 A1 relates to a system that facilitates resource reclamation in a wireless communications system having a disjoint serving sector configuration.

### SUMMARY

The invention is defined in the appended set of claims.

Some embodiments of the disclosure relate to dynamically reclaiming communication resources allocated to a device in a network. Reclaiming such resources can comprise releasing allocated communication resources in response to communication activity at a device such as an access point which can be communicatively coupled with (or attached to) the device fulfilling a reclamation criterion. Communication resources can include one or more of a logical address, a one-way data stream, a two-way data stream, a signaling stream, or the like. In one aspect, the access point can provide wireless service to the device, which is allocated a communication resource, and can monitor communication activity based at least on network traffic associated with the device, such as traffic originating at the device or terminating at the device. An access point (e.g., a base station) to which the device is attached can determine a metric associated with the communication activity and, in response to the metric fulfilling a reclamation criterion, the access point can release, independently or based on instruction from another device, the allocated communication resource. In another aspect, the access point can monitor attachment activity (e.g., level of attachment signaling) at the access point and, in response to the attachment activity being indicative of attachment of a device (either a previously attached device or a newly attached device), the access point can initiate provisioning of the device.

In yet another aspect, a network node that can provision communication resources can reutilize a finite pool of communication resources by allocating and deallocating communication resources dynamically, in response to communication activity and attachment activity. The device can be end-user equipment, e.g., a user device such as a wireless portable device, a wearable device, a computing device, a display device, an access point, or the like. In certain embodiments, the device can be a tethered appliance, a mobile appliance, an appliance with wireless functionality, or the like.

One or more embodiments of the disclosure can provide various advantages related to provisioning of communication resources in a network. For example, rather than statically preserving a communication resource, a device (e.g., an access point, such as a residential wireless gateway or an enterprise wireless gateway) can dynamically release the provisioned resource in response to a configurable reclamation criterion. Thus, in one aspect, the likelihood of exhausting a pool of finite communication resources (e.g., logical addresses) can be steeply mitigated or substantially avoided. For another example, the dynamic release of provisioned communication resources can prolong satisfactory operation of a network operating with legacy protocols, which can significantly reduce operational cost for a content or service provider or a multiple service operator (MSO) that administers such network.

Additional aspects or advantages of the subject disclosure will be set forth in part in the description which follows, and in part will be obvious from the description, or may be learned by practice of the subject disclosure. The advantages of the subject disclosure will be realized and attained by means of the elements and combinations particularly pointed out in the appended claims. It is to be understood that both the foregoing general description and the following detailed description are exemplary and explanatory only and are not restrictive of the subject disclosure.

### BRIEF DESCRIPTION OF THE DRAWINGS

The annexed drawings are an integral part of the subject disclosure and illustrate example embodiments thereof. Together with the description set forth herein and the claims appended hereto, the annexed drawings serve to explain various principles, features, or aspects of the subject disclosure.
**FIG. 1** illustrates an exemplary network environment in which communication resources can be provisioned dynamically in accordance with one or more aspects of the disclosure.
**FIG. 2** illustrates an exemplary embodiment of a device that can be dynamically provisioned in accordance with one or more aspects of the disclosure.
**FIG. 3** illustrates an exemplary embodiment of a device for communication that can be part of a device dynamically provisioned in accordance with one or more aspects of the disclosure.
**FIG. 4** illustrates an exemplary embodiment of a network node in accordance with one or more aspects of the disclosure.
**FIGs. 5****,** **6A-6B****,** and **7** illustrate exemplary methods for dynamically releasing allocated communication resources in accordance with one or more aspects of the disclosure.
**FIG. 8** illustrates an exemplary method for dynamically provisioning an access point in accordance with one or more aspects of the disclosure.

### DETAILED DESCRIPTION

The various aspects described herein can be understood more readily by reference to the following detailed description of exemplary embodiments of the subject disclosure and to the annexed drawings and their previous and following description.

Before the present systems, articles, apparatuses, and methods are disclosed and described, it is to be understood that the subject disclosure is not limited to specific systems, articles, apparatuses, and methods for dynamic release of a communication resource allocated to a device (e.g., an appliance) in a network. A communication resource can comprise one or more of a logical address, a one-way data stream, a two-way data stream, a signaling stream, or the like. Data streams can comprise content (audio and/or video), certain signaling, data, and so forth. It is also to be understood that the terminology used herein is for the purpose of describing particular embodiments only and is not intended to be limiting.

As used in the specification and the appended claims, the singular forms "a," "an" and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

As utilized in this specification and the annexed drawings, the terms "system," "component," "unit," "interface," "platform," "node," "function," "engine" and the like are intended to include a computer-related entity or an entity related to an operational apparatus with one or more specific functionalities, wherein the computer-related entity or the entity related to the operational apparatus can be either hardware, a combination of hardware and software, software, or software in execution. Such entities also are referred to as "functional elements." As an example, a unit can be, but is not limited to being, a process running on a processor, a processor, an object (metadata object, data object, signaling object), an executable computer program, a thread of execution, a program, a memory (e.g., a hard-disc drive), and/or a computer. As another example, a unit can be an apparatus with specific functionality provided by mechanical parts operated by electric or electronic circuitry which is operated by a software application or a firmware application executed by a processor, wherein the processor can be internal or external to the apparatus and can execute at least a portion of the software application or the firmware application. As yet another example, a unit can be an apparatus that provides specific functionality through electronic functional elements without mechanical parts, the electronic functional elements can include a processor therein to execute software or firmware that provides, at least in part, the functionality of the electronic functional elements. The foregoing examples and related illustrations are but a few examples and are not intended to be limiting. In addition, while such illustrations are presented for a unit, the foregoing examples also apply to a node, a function, a controller, a component, a system, a platform, and the like. It is noted that in certain embodiments, or in connection with certain aspects or features such embodiments, the terms "unit," "component," "system," "interface," "platform" "node," "function," "engine" can be utilized interchangeably.

Throughout the description and claims of this specification, the words "comprise" and "having" and their variations, such as "comprising" and "comprises," "having" and "has," mean "including but not limited to," and are not intended to exclude, for example, other units, nodes, components, functions, interfaces, actions, steps, or the like. "Exemplary" means "an example of' and is not intended to convey an indication of a preferred or ideal embodiment. "Such as" is not used in a restrictive sense, but for explanatory purposes.

Reference will now be made in detail to the various embodiments and related aspects of the subject disclosure, examples of which are illustrated in the accompanying drawings and their previous and following description. Wherever possible, the same reference numbers are used throughout the drawings to refer to the same or like parts.

The disclosure addresses and identifies, in one aspect, the issue of finite communication resources and provisioning thereof in a network. As described in greater detail below, the disclosure relates to dynamically reclaiming communication resources allocated to a device in a network. Reclaiming such resources can comprise releasing allocated communication resources in response to communication activity of an access point communicatively coupled with (or attached to) the device fulfilling a reclamation criterion. In one aspect, the access point can provide wireless service to the device, which is allocated a communication resource, and can monitor communication activity based at least on network traffic associated with the device, such as traffic originating at the device or terminating at the device. An access point (or base station) to which the device is attached to can determine a metric associated with the communication activity and, in response to the metric fulfilling a reclamation criterion, the access point can release the allocated communication resource. In another aspect, the access point can monitor attachment activity (e.g., level of attachment signaling) at the access point and, in response to the attachment activity being indicative of attachment of a device (either a previously attached device or a newly attached device), the access point can initiate provisioning of the device. In yet another aspect, a network node that can provision communication resources can reutilize a finite pool of communication resources by allocating and deallocating communication resources dynamically, in response to communication activity and attachment activity. The device can be end-user equipment, e.g., a user device such as a wireless portable device, a wearable device, a computing device, a display device, an access point, or the like. In certain embodiments, the device can be a tethered appliance, a mobile appliance, an appliance with wireless functionality, or the like. Certain functional elements of the subject disclosure can be implemented (e.g., performed) by software, hardware, or a combination of software and hardware. Functional elements of the various embodiments described in the present specification and illustrated in the annexed drawings can be employed in operational environments (access network, telecommunication network, signaling network, etc.) that can include, for example, digital equipment, analog equipment, or both, wired or wireless equipment, etc.

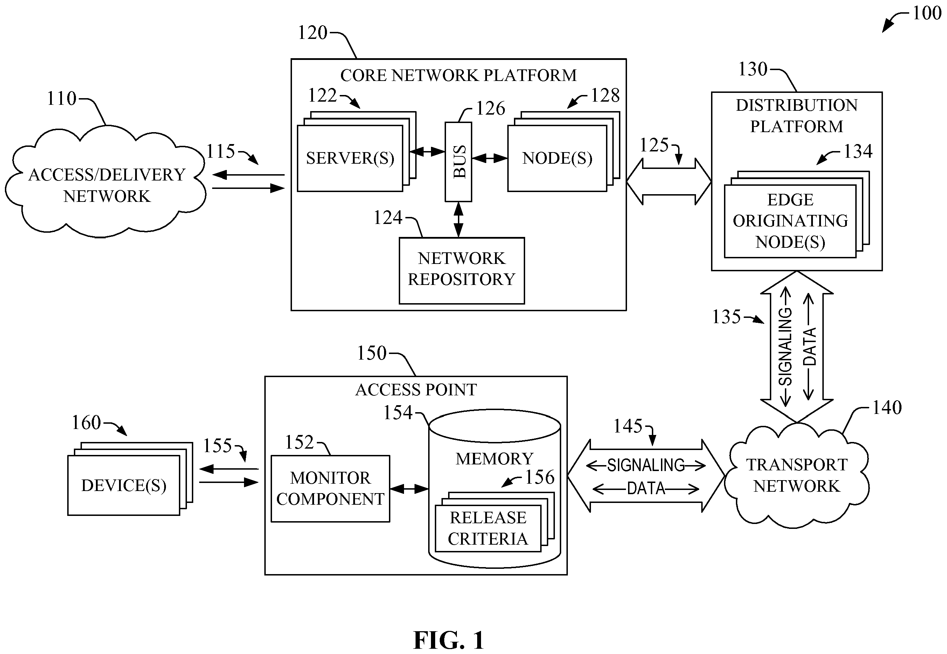

Referring to the drawings, **FIG. 1** illustrates a high-level block diagram of an exemplary network environment 100 in which communication resources can be provisioned dynamically in accordance with at least certain aspects of the disclosure. The communication resources can comprise one or more of logical address(es) (e.g., internet protocol (IP) address(es), medium access control address(es), session initiation protocol (SIP) address(es), universal resource identifier (URI) path(s), or the like), bandwidth, control channels, and so forth. The exemplary network environment 100 comprises an access/delivery (A/D) network 110 which can include wireless networks, wire line networks, and any combination thereof. The access/delivery network 110 can include satellite, coaxial cable, optical fiber and/or wireless networks, one or more of wide area networks (WANs), one or more local area networks (LANs), signaling networks (e.g., SS#7, etc.), any combination thereof, and so forth. Such networks can operate in accordance with almost any communication protocol for wire line communication or wireless communication. In certain embodiments, A/D network 110 can have several functional elements that can provide a backbone network, such as a high-capacity packet-switched network. In other embodiments, A/D network 110 can have internal structure, with several functional elements that can provide at least two main operational blocks: a backbone network (e.g., a high-capacity packet-switched network) and a regional access network (RAN). The internal structure also can include functional elements that provide more spatially localized networks, such as local area networks, home area networks, or the like. Both the backbone network and the RAN can be WANs, for example, with the backbone network having a larger geographical scope than the RAN.

The A/D network 110, or a functional element thereof, can be functionally coupled (e.g., communicatively coupled) to a core network platform 120 via a data and signaling pipe 115 having an upstream link (or uplink (UL)) and a downstream link (or downlink (DL)). The UL and DL are illustrated in FIG. 1 with arrows in opposite directions. The data and signaling pipe 115 can comprise one or more of: a reference link and related components; conventional bus architectures, such as address buses, system buses; wired links, such as fiber optic lines, coaxial lines, hybrid fiber-coaxial links, Ethernet lines, T-carrier lines, twisted-pair line, or the like; and various connectors (e.g., an Ethernet connector, an F connector, an RS-232 connector, or the like); wireless links, including terrestrial wireless links, satellite-based wireless links, or a combination thereof; and so forth.

The core network platform 120 can include various network nodes which can be distinguished according to their functionality. As illustrated, the various network nodes can comprise one or more servers 122, one or more nodes 128 (e.g., gateway node(s) or gateway(s)), and a network repository 124. The one or more servers 122 can comprise, for example, management server(s), application server(s), proxy server(s), and the like. While illustrated as a single entity, the network repository 124 can be distributed in order to provide data resiliency and other data management advantages. Functionality and architecture of the one or more servers 122, the one or more nodes 128, and the network repository 124 generally is specific, yet not exclusive, to the embodiment of the core network platform 120. For instance, in an exemplary embodiment in which the core network platform 140 embodies or comprises an internet protocol (IP) multimedia subsystem (IMS) network, network repository 124 can be a computing device, such as a home subscriber server (HSS); server(s) 122 can comprise computing devices, such as application server(s) and specific function control nodes (e.g., Call Session Control Functions (CSCFs), such as serving CSCF (S-CSCF) and interrogating CSCF (I-CSCF)) and proxy servers; and node(s) 128 can comprise gateway node(s) having a breakout gateway control function (BGCF), a media gateway (MGW) and/or a signaling gateway (SGW), and media gateway control function (MGCF).

Network nodes in core network platform 120 can be functionally coupled through a bus 126. As illustrated, the bus 126 can enable exchange of information (e.g., data or signaling, or both) among server(s) 122, node(s) 128 (e.g., gateway(s)), and network repository 124. Bus 126 can include a plurality of reference links (Cx, Cr, Dh, Dx, Gm, Ma, Mg, etc.), and related components and bus architectures, such as address buses, system buses, and the like.

In certain embodiments, the core network platform 120 can permit implementation of various network management operations (access authorization and accounting, provisioning, billing, etc.); content integrity monitoring; or network functionality comprising programming monitoring, advertisement monitoring, or both. In connection with implementation of network management, the one or more servers 122 can comprise an access request manager server, a provisioning server, an accounting server, and a billing record collector server. In one embodiment, the access request manager server can comprise an authentication, authorization, and account (AAA) server, which can implement one or more access protocols (Kerberos, RADIUS, Diameter, lightweight directory access protocol (LDAP), etc.), and access control unit (or access controller); the provisioning server can be a dynamic host configuration protocol (DHCP) engine; and the billing record collector server can be an IP detail record (IPDR) collector server.

The core network platform 120, via the provisioning server, for example, can provision one or more devices (e.g., appliances), such as access point 150, in the exemplary network environment 100. To at least such end, the provisioning server (e.g., a DHCP engine) can exchange messages with the one or more appliances. Distribution platform 130, transport network 140, and associated data and signaling pipes can enable such exchange. In one embodiment, an appliance (e.g., access point 150) can be a low-power access point that provides wireless service to a confined area spanning a region with dimensions nearly commensurate with dimensions of a structure having the low-power access point. In another embodiment, the appliance can be an indoor-based wireless access point. In yet another embodiment, an appliance can be an outdoor-based access point that can provide wireless service to a confined area spanning a region with dimensions nearly commensurate with dimensions of a structure having the low-power access point.

In one aspect, the core network platform 120 is functionally coupled (e.g., communicatively coupled) to the distribution platform 130 via a data and signaling pipe 125. Similarly to data and signaling pipe 115, the data and signaling pipe 125 can comprise one or more of: a reference link and related components; conventional bus architectures such as address buses, system buses; wired links, such as fiber optic links, coaxial links, hybrid fiber-coaxial links, and various connectors (e.g., an Ethernet connector, an F connector, an RS-232 connector, or the like); wireless links (either terrestrial links or deep-space links); and so forth.

Distribution platform 130 can comprise one or more signal processing components (not shown) that can receive and operate on an information stream, such as a data stream, a signaling stream, a combination thereof. Such component(s) can perform one or more operations on the information stream, such as encoding, modulation, multiplexing, up-conversion, combination, and the like. In one embodiment, at least one of such signal processing components can embody a termination system (e.g., a cable modem termination system (CMTS) in an hybrid fiber-coaxial (HFC)-type network). As illustrated, the distribution platform 130 can comprise a group of one or more edge originating nodes 134 that can transmit the information stream. In another embodiment, each edge originating node of the group of one or more originating nodes 134 can embody an edge quadrature amplitude modulation (QAM) node. In another embodiment, each edge originating node of the group of one or more originating nodes 134 can embody a device that consolidates the functionality of a termination system (e.g., a CMTS) and an edge node (e.g., an edge QAM node). In other embodiments, each originating node of the group of one or more originating nodes 134 can embody a network router (e.g., broadband remote access server (BRAS)) or a network switch (e.g., a digital subscriber line access multiplexer (DSLAM)) for transmission of information streams based on a packet-switched (PS) communication protocol (e.g., internet protocol). While illustrated as a single block, in one or more embodiments, distribution platform 130 can be distributed, having a centralized deployment site (or plant) and a plurality of hub sites (also referred to as sites). In such embodiment(s), each one of the hub sites can comprise an edge originating node of the group of one or more edge originating nodes 134.

The distribution platform 130 can receive data (data streams, audio, video, any combination thereof, etc.) and signaling (control instructions, clock signals, etc.) from a functional element that is part, for example, of core network platform 120 or that is functionally coupled thereto. The functional element can relay the data and signaling from the A/D network 110. In addition or in the alternative, the functional element can originate the data and signaling. In one scenario, the functional element can be a server (e.g., one of server(s) 122 or a server deployed as part of the A/D network 110) that supplies a combination of audio signal and video signal, such as an audiovisual signal comprising a video asset. The server can be, for example, a content server for pay-per-view programming or video-on-demand assets, an application server (e.g., an email server), a data server, a telephony server, a backbone network router, or the like. In such scenario, based on the formatting of the audiovisual signal, one or more signal processing components (not shown) in distribution platform can process (e.g., encode, encrypt, modulate, multiplex, up-convert, combine) the audiovisual signal and supply a resulting audiovisual signal to an edge originating node of the group of one or more edge originating nodes 134. An edge originating node can transmit a plurality of P (a natural number) data streams conveying at least a portion of the audiovisual signal. It should be appreciated that in certain embodiments, the originating node can process the audiovisual signal without reliance on such one or more signal processing components. In another scenario, a source node (e.g., a satellite transceiver coupled to an asset source) coupled to the distribution platform 130 can generate an audiovisual signal, which can be processed by one or more processing components and supplied to an edge originating node of the one or more edge originating nodes 144. Such edge originating node can transmit a plurality of P data streams conveying at least a portion of the audiovisual signal.

The transport network 140 can be a WAN that can be embodied in a wireless network, a wire line network, or a combination thereof, and supplies data service(s), such as television programming, video on demand, internet service, packet-switched telephony, to a user location which can be stationary (e.g., a location of an appliance, such as the AP 150) or mobile (e.g., a location of mobile device). Transport network 140 can be embodied in an optic fiber network, a coaxial cable network, or an HFC network, a wireless network, any combination thereof, and the like. In an embodiment in which the transport network 140 is an HFC network, data pipe and signaling 145 can comprise several optic fiber links and associated optical functional elements, such as downstream lasers, light amplifiers, last-mile fiber aggregator nodes, and the like. In addition, in such embodiment, delivery network can comprise various RF amplifiers and coaxial taps to respective dwellings (residential, multi-unit, enterprise, etc.) wherein an appliance, such as the AP 150 or other end-user equipment, such as CPE, can consume a data service provided through the various networks in the exemplary network environment 100. In one aspect, the CPE can be functionally coupled to a cable modem or other device (e.g., a network interface device (NID)) that serves as the network gateway to the dwelling network from the transport network 140. As another illustration, in an embodiment in which the transport network 140 is a wired broadband packet-switched network, data and signaling pipes 135 and 145 can comprise Ethernet links, and can include network routers such as BRASs and network switching, such as DSLAMs. The network switches can be functionally coupled to home gateways (e.g., digital subscriber line (DSL) modems) in dwelling in which an appliance (e.g., AP 150 or other end-user equipment, such as CPE) can consume or can enable data services provided through the various networks in the exemplary network environment 100.

The access point 150 can serve as a network gateway to the dwelling network comprising one or more devices 160 (e.g., end-user equipment, such as user devices), which can be pseudo-stationary, tethered, or mobile, and can comprise wireless functionality. To at least such end, a server of the one or more servers 122 can provision the AP 150. As described herein, provisioning of the AP 150 can comprise dynamic reclamation of a communication resource allocated to the AP 150, thereby causing such provisioning to be dynamic. Reclamation of the communication resource comprises releasing an allocation of such resource. In one aspect, dynamic reclamation of the communication resource can be based at least in part on a level of communication activity at the AP 150, as described herein.

In one scenario, a provisioning server (e.g., one of server(s) 122) can exchange provisioning messaging with the AP 150 after activation thereof or after power-on. In one aspect, as part of provisioning, the AP 150 can receive, from the provisioning server, for example, signaling indicative of an allocation of a communication resource. Such allocation can comprise a lease of a logical address (e.g., an IP address) assigned to the AP 150. After provisioning, the AP 150 can serve (e.g., transmit and receive) network traffic (signaling and/or data) to and from a device of the one or more devices 160. The network traffic can comprise one or more of: a first packet-switched information stream directed to the device (e.g., a user device) or a second packet-switched information stream originated at the device (e.g., the user device). The network traffic can be associated with a digital service provided by the core network platform 120 or the distribution platform 130, or both. Prior to serving the network traffic, the device typically attaches to the AP 150, e.g., the device exchanges signaling with the AP 150, the AP 150 processes the signaling (e.g., the AP 150 can apply access logic), and in response, the AP 150 can decline or grant the device access to the digital service. When such access is granted, the device is referred to as attached to the AP 150 and can exchange data or signaling, or both, with the AP 150.

Various features of the data and signaling can define a specific communication activity. In one aspect, communication activity can be represented with a logical state indicative of operational state of a link (wired or wireless) among the AP 150 and the device. In another aspect, communication activity can be represented with another logical state indicative of presence or absence of network traffic among the AP 150 and the device. In yet another aspect, communication activity can be assessed based at least on load (processing load, memory access load, size of queued traffic, etc.) of the AP 150 due to processing of the network traffic. In still another aspect, communication activity can be assessed based on size of packets that comprise the network traffic. For instance, for a communication protocol that permits delivery and reception of packets of adaptive size, presence of small size packet (e.g., control packets, or pilot packets) can be indicative of low communication activity. As illustrated, the AP 150 can comprise a monitor component 152 that can determine a level of communication activity at the AP 150. To at least such end, the monitor component 152 can evaluate various metrics (with Boolean values and/or numeric values) indicative of such communication activity. Monitor component 152 can monitor network traffic in nearly real time or in accordance with a predetermined schedule. In certain embodiments, such schedule can be autonomously determined at the AP 150 based at least on historical data associated with attachment of the user device to the access point.

For a level of communication activity that fulfills a release criterion, or reclamation criterion, the AP 150 can release the allocation of the communication resource previously provisioned by the provisioning server. As illustrated, one or more release criteria can be retained in a memory element (register, file, database, etc.) of the AP 150. In one embodiment, to release such allocation, the AP 150 can transmit a provisioning release message to the provisioning server. Such message can indicate to the provisioning server that the communication resource can be made available for allocation to a different appliance or to the AP 150 at a different instant. The provisioning release message can be composed in accordance with various communication protocols (transmission control protocol/internet protocol (TCP/IP), DHCP, simple network management protocol (SNMP), etc.). For instance, in embodiments in which the communication resource is a logical address, the provisioning release message can be a DHCP Release message.

In one aspect, after the communication resource is released, the monitor component 152 can monitor reception of signaling (e.g., pilot signals or other control signals) from one of the device(s) 160. In response to receiving suitable signaling, such as a protocol trigger message (e.g., DHCP Discovery) indicative of an attachment attempt by a device of the one or more devices 160, the AP 150 can initiate exchange of provisioning messaging with the provisioning server (e.g., a resource allocation engine).

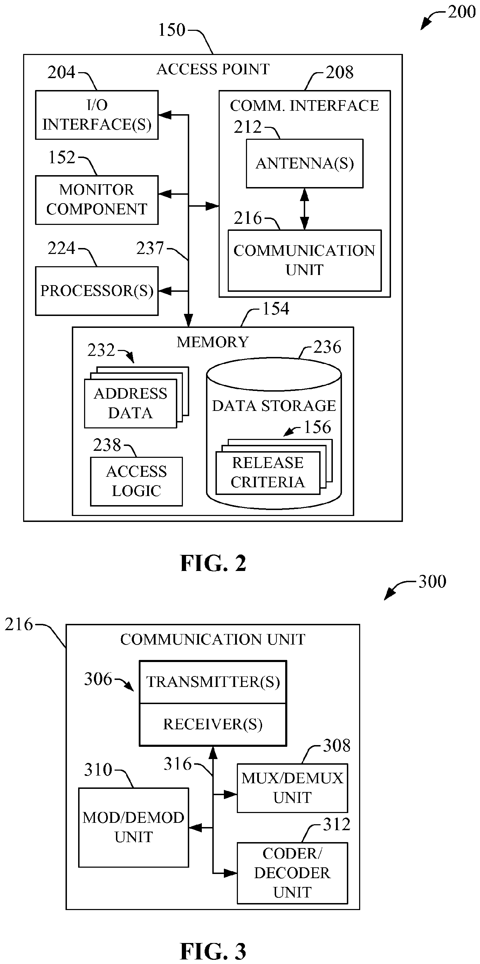

**FIG. 2** illustrates an example embodiment 200 of an access point 150 that can be dynamically provisioned in accordance with at least certain aspects described herein. In one aspect, the AP 150 can embody a residential wireless gateway or an enterprise wireless gateway. To permit wireless communication with a device (e.g., device 160) and provide wireless service, the AP 150 includes a communication interface 208 having one or more antennas 212 and a communication unit 216. As illustrated in exemplary embodiment 300 shown in **FIG. 3**, the communication unit 216 can comprise a set of one or more transmitters/receivers 306, and components therein (amplifiers, filters, etc.), functionally coupled to a modulator/demodulator (mod/demod) unit 310 (also referred to as modem 310), a multiplexer/demultiplexer (mux/demux) unit 308, and a coder/decoder unit 312 (also referred to as codec 312). Each of the transmitter(s)/receiver(s) can transmit and receive wireless signal via the one or more antennas 212. In one implementation, each of the transmitter(s)/receiver(s) also can transmit and receive signals upstream via, at least in part, a peripheral interface that can be part of the one or more I/O interfaces 204. In another implementation, communication unit 216 can transmit and receive signals via modem 310 and a peripheral interface that can be part of the one or more interfaces 204. In an example of an HFC-type network, the modem 310 can utilize the data over cable service interface specification (DOCSIS) standard for communication. In such implementations, the AP 150 can establish, via the peripheral interface, a packet-based protocol tunnel (e.g., a virtual private network (VPN) tunnel, such as IPSec tunnel; a generic routing encapsulation (GRE) tunnel; or the like) with one of the edge originating network node(s) 134.

Electronic components and associated circuitry, such as mux/demux unit 308, modem 310, and codec 312, can permit processing and manipulation, e.g., coding/decoding, deciphering, modulation/demodulation, of signal(s) received by the AP 150 and signal(s) to be transmitted by the AP 150. In one aspect, received or transmitted wireless signal(s) can be modulated and coded, or otherwise processed, in accordance with one or more radio technology protocols (e.g., 3rd Generation Partnership Project (3GPP) Universal Mobile Telecommunication System (UMTS), 3GPP Long Term Evolution (LTE), or the like). The electronic components in the communication unit 216, including the one or more transmitters/receivers 306, can exchange information (e.g., data, code instructions, signaling and related payload data, or the like) through a bus 316, which can embody or comprise at least one of a system bus, and address bus, a data bus, a message bus, or a reference link or interface. Each of the one or more receivers/transmitters 306 can convert signal from analog to digital, and vice versa. In addition or in the alternative, receiver(s)/transmitter(s) 306 can divide a single data stream into multiple parallel data streams, or perform the reciprocal operation. Such operations may be conducted as part of various multiplexing schemes. As illustrated, the mux/demux unit 308 is functionally coupled to the one or more receivers/transmitters 306 and can permit processing of signal(s) in time and frequency domain. In one aspect, the mux/demux component 308 can multiplex and demultiplex information (e.g., data, signaling, or both) according to various multiplexing schemes such as time division multiplexing (TDM), frequency division multiplexing (FDM), orthogonal frequency division multiplexing (OFDM), code division multiplexing (CDM), space division multiplexing (SDM). In addition or in the alternative, in another aspect, the mux/demux component 308 can scramble and spread information (e.g., codes) according to substantially any code; e.g., Hadamard-Walsh codes, Baker codes, Kasami codes, polyphase codes, and so on. The modem 310 can modulate and demodulate information (e.g., data, signaling, or both) according to various modulation techniques, such as frequency modulation (e.g., frequency-shift keying), amplitude modulation (e.g., M-ary quadrature amplitude modulation (QAM), with M a positive integer; amplitude-shift keying (ASK)), phase-shift keying (PSK), and the like). In addition, processor(s) 224 can enable, at least in part, the AP 150 to process data (e.g., symbols, bits, or chips) for multiplexing/demultiplexing, modulation/demodulation, such as implementing direct and inverse fast Fourier transforms, selection of modulation rates, selection of data packet formats, inter-packet times, etc.

The codec 312 can operate on information (e.g., data, signaling, or both) in accordance with one or more coding/decoding schemes suitable for communication, at least in part, through the one or more transmitters/receivers 306. In one aspect, the coding/decoding schemes, or related procedures, can be retained as a group of one or more code instructions in memory 154. In a scenario in which wireless communication among the AP 150 and a device (e.g., one of device(s) 160) utilizes multiple-input multiple-output (MIMO), multiple-input single-output (MISO), single-input multiple-output (SIMO) or single-input single-output (SISO) operation, the codec 312 can implement at least one of space-time block coding (STBC) and associated decoding; or space-frequency block (SFBC) coding and associated decoding. In addition or in the alternative, the codec 312 can extract information from data streams coded in accordance with spatial multiplexing scheme. In one aspect, to decode received information (data, signaling, or both), the codec 312 can implement at least one of computation of log-likelihood ratios (LLR) associated with constellation realization for a specific demodulation; maximal ratio combining (MRC) filtering, maximum-likelihood (ML) detection, successive interference cancellation (SIC) detection, zero forcing (ZF) and minimum mean square error estimation (MMSE) detection, or the like. The codec 312 can employ, at least in part, mux/demux component 308 and mod/demod component 310 to operate in accordance with aspects described herein.

The AP 150 can operate in a variety of wireless environments having wireless signals conveyed in different electromagnetic radiation (EM) frequency bands. To at least such end, the communication unit 212 can process (code, decode, format, etc.) wireless signal(s) within a set of one or more EM frequency bands (also referred to as frequency bands) comprising one or more of radio frequency (RF) portions of the EM spectrum, microwave portion(s) of the EM spectrum, or infrared (IR) portion of the EM spectrum. In one aspect, the set of one or more frequency bands can include at least one of (i) all or most licensed EM frequency bands, or (ii) all or most unlicensed frequency bands currently available for telecommunication.

In the illustrated embodiment, the AP 150 comprises a memory 154 and one or more processors 224 functionally coupled to the memory 154. In one aspect, the functional coupling is provided via a bus 237. In one aspect, the memory 154 can comprise computer-executable instructions (not shown) encoded thereon. In another aspect, the memory 154 can comprise address data 232 that can contain a logical address (e.g., a MAC address) for at least the radio interface 208. In certain implementations, such as residential wireless gateways, the address data 232, a memory element within memory 154, can comprise a logical address for a network adapter (e.g., a multimedia terminal adapter) that can be part of the I/O interface(s) 204. In certain implementations, address data 232 can be retained in a removable element, such as a subscriber identification module (SIM) card storage, a universal integrated circuit card (UICC) storage, or a removable user identity module (RUIM).

A processor of the at least one or more processors can be configured, by the computer-executable instructions, to receive signaling indicative of an allocation of a communication resource to the AP 150, to determine a level of communication activity at the apparatus, and to release the allocation of the communication resource in response to the level of communication activity fulfilling a specified criterion. The specified criterion can be at least one of the one or more release criteria 156 that can be contained in the memory 154. The allocation of the communication resource to the AP 150 can comprise a lease of a logical address (e.g., an IP address) assigned to the AP 150.

In one aspect, to determine the level of communication activity, the processor of the one or more processors 224 can be configured to ascertain that a communication link among the apparatus and a user device is operating. The specified criterion can comprise a parameter indicative of the communication link being operating. In another aspect, to determine the level of communication activity, such processor can be further configured to monitor network traffic associated with a user device attached to the AP 150. In yet another aspect, to monitor the network traffic, the processor can be further configured to determine a metric indicative of a load associated with the network traffic. The specified criterion can comprise a threshold for the load of the network traffic. In still another aspect, to monitor the network traffic, the processor can be configured to determine a size of a packet included in the network traffic, wherein the specified criterion can comprise a threshold for the size of the packet.

As illustrated, the AP 150 comprises one or more processors 224 which can permit, at least in part, functionality of one or more functional elements of the AP 150 in accordance with at least certain aspects described herein. The one or more processors 224 can be functionally coupled to each functional element within the AP 150 and to the memory 154 via bus 237. In certain implementations, the bus 237 can be embodied in one or more of: a memory bus, a system bus, an address bus, a message bus, a power bus, or one or more reference links or interface(s). While in embodiment 200, the one or more processors 224 are illustrated as external to the various functional elements (e.g., component(s), interface(s), platform(s), node(s)) of the AP 150, in an additional or an alternative embodiment, the one or more processors 224 can be distributed among a plurality of such functional elements. In some embodiment(s), one or more functional elements of the AP 150 can reside within the memory 154 as one or more sets of computer-accessible instructions, e.g., computer-readable computer-executable instructions. Such instructions, in response to execution by a processor of the one or more processors 224, can implement the functionality of at least one of the functional elements of the AP 150 in accordance with aspects of the disclosure.

As illustrated, the AP 150 comprises the monitor component 152 which can operate as described herein. In one aspect, monitor component 152 can determine a level of communication activity at the AP 150 and, in response to the level of communication activity fulfilling a release criterion (e.g., the AP 150 is deemed non-servicing), the monitor component 152 can transmit a provisioning release message to a network node (e.g., a provisioning server of the one or more servers 122) that provisioned a communication resource to the AP 150. One or more release criteria can be retained in memory 154. In one embodiment, the monitor component 152 can monitor attachment signaling at the AP 150 after a communication resource is released, e.g., a lease of an IP address to a device attached to the AP 150 is released. In response to the attachment signaling indicating that a device is attached to the AP 150-e.g., communicatively coupled and configured for wireless communication with the AP 150-the monitoring component 152 can initiate provisioning (e.g., transmit at least one provisioning message) to the network node at core network platform 120 that can provision a communication resource to the device. In one aspect, the monitoring component can compare level of attachment signaling with a threshold or, more generally, an attachment criterion, and based on outcome of the comparison determine if a device is attached to the AP 150. Allocation criteria (not shown) can be retained in memory 154.

The memory 154 in AP 150 can retain access logic 238 which can control access to wireless service via the AP 150. When executed, for example, by a processor of processor(s) 224 or monitor component 152, the access logic 238 can determine if a device that attempts attachment to the AP 150 is permitted to attach to and communicate via the AP 150. To attempt attachment, the device can transmit pilot signals conveying at least one credential of the device and instructing the access point to initiate an update at the core network platform 120 of the position of the location of the device. For a device that communicates in accordance with Universal Mobile Technology Standard (UMTS)-based radio technology, the device can transmit location area update (LAU) signaling or routing area update (RAU) signaling to attempt attachment. For a device that communicates in accordance with LTE-based radio technology, the device can transmit tracking area update signaling. In one aspect, the access logic 238 can comprise one or more lists, each having at least one credential of a device authorized to access wireless service via the AP 150. The credential can be a code that identifies hardware of the device. Such code can be one of an international mobile subscriber identity (IMSI), a temporary international mobile subscriber identity (TIMSI), packet TIMSI (P-TIMSI), an international mobile equipment identity (IMEI), an mobile directory number (MDN), a mobile identification number (MIN), a Telecommunication Industry Association (TIA) electronic serial number (ESN), or a multi-bit identification number such as a mobile equipment identifier (MEID). In another aspect, the access logic 238 can comprise a challenge-response procedure that, when executed, poses a challenge (e.g., a request for a password) and collects a response. In response to reception of attachment signaling, the AP 150 can execute the access logic 150 and based on comparison of credential or outcomes of challenge-response procedures, the AP 150 can grant or deny attachment of the device.

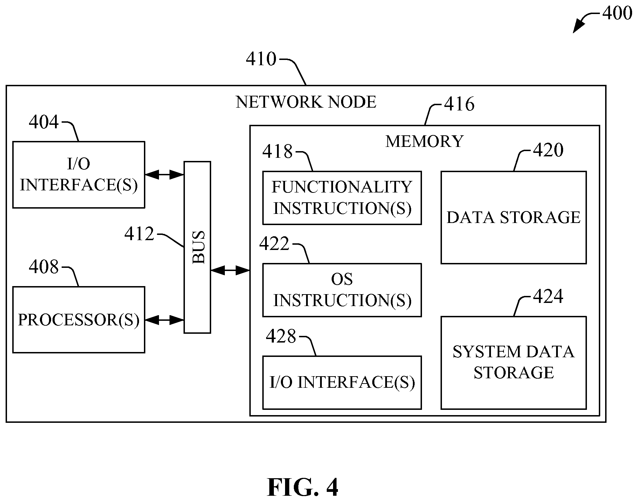

**FIG. 4** is a block diagram of an exemplary embodiment 400 of a network node 410 in accordance with one or more aspects of the disclosure. Network node 410, in one aspect, is an apparatus that can embody a network element of core network 120 or distribution platform 130. As an example, network node 410 can embody a server of server(s) 122, a node of node(s) 128 (such as a gateway node), or a data storage unit of network repository 124. As another example, the network node 410 can embody access request manager 530, access controller 540, or resource allocation engine 550. In the illustrated embodiment, the network node 410 comprises a group of one or more I/O interface(s) 404, a group of one or more processors 408, a memory 416, and a bus 412 that functionally couples (e.g., communicatively couples) various functional elements of the network node 410 including the group of one or more processors 408 to the memory 416. In scenarios in which operation of network node 410 can be critical to network performance, such as in guaranteed service quality (e.g., guaranteed bit rate) scenarios, the group of one or more processors 408 can comprise a plurality of processors that can exploit concurrent computing.

Functionality of network node 410 can be configured by a group of computer-executable instructions (e.g., programming code instructions or programming modules) that can be executed by a processor of the one or more processors 408. Generally, programming modules can comprise computer code, routines, objects, components, data structures (e.g., metadata objects, data object, control objects), and so forth, that can be configured (e.g., coded or programmed) to perform a particular action or implement particular abstract data types in response to execution by the processor of the one or more processors 408. For example, a first group of computer-executable instructions can configure logic that, in response to execution by the processor, enables the network node 410 to operate as a server (a provisioning server, an AAA server, a proxy server, a communication management server, an application server, etc.), a gateway node (a session border controller (SBC), a media gateway control function ((MGCF), etc.), or a data management unit which can be part of network repository 124.

Data and computer-accessible instructions (e.g., computer-readable instructions and computer-executable instructions) associated with specific functionality of the network node 410 can be retained in memory 416. Such data and instructions can permit implementation, at least in part, of the dynamic provisioning of communication resources in accordance with aspects described herein. In one aspect, the computer-accessible instructions can embody any number of programming code instructions or program modules that permit specific functionality. In the subject specification and annexed drawings, memory elements are illustrated as discrete blocks, however, such memory elements and related computer-accessible instructions (e.g., computer-readable and computer-executable instructions) and data can reside at various times in different storage elements (registers, files, memory addresses, etc.; not shown) in memory 416.

Data storage 420 can comprise a variety of data, metadata, or both, associated with dynamic provisioning of communication resources in accordance with aspects described herein. Memory 416 also can comprise one or more computer-executable instructions for implementation of specific functionality of the network node 410 in connection with the dynamic provisioning of communication resources described herein. Such computer-executable instructions can be retained as a memory element labeled functionality instruction(s) 418. In one aspect, as described herein, functionality instruction(s) 418 can be stored as an implementation (e.g., a compiled instance) of one or more computer-executable instructions that implement, and thus provide, at least the functionality of the methods described herein. Functionality instruction(s) 418 also can be transmitted across some form of computer readable media. It should be appreciate that different functionality instruction(s) can render physically alike network nodes into functionally different components, with functional differences dictated by logic (e.g., computer-executable instructions and data) specific to each one of such network nodes and defined by the functionality instruction(s).

Memory 416 can be embodied in a variety of computer-readable media. Exemplary computer-readable media can be any available media that is accessible by a processor in a computing device, such as one processor of the group of one or more processors 408, and comprises, for example, both volatile and non-volatile media, removable and non-removable media. As an example, computer-readable media can comprise "computer storage media," or "computer-readable storage media," and "communications media." Such storage media can be non-transitory storage media. "Computer storage media" comprise volatile and non-volatile, removable and non-removable media implemented in any methods or technology for storage of information such as computer readable instructions, data structures, program modules, or other data. Exemplary computer storage media comprises, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be utilized to store the desired information and which can be accessed by a computer or a processor therein or functionally coupled thereto.

Memory 416 can comprise computer-readable non-transitory storage media in the form of volatile memory, such as random access memory (RAM), electrically erasable programmable read-only memory (EEPROM), and the like, or non-volatile memory such as read only memory (ROM). In one aspect, memory 416 can be partitioned into a system memory (not shown) that can contain data and/or programming modules that enable essential operation and control of the network node 410. Such program modules can be implemented (e.g., compiled and stored) in memory element 422, referred to as operating system (OS) instruction(s) 422, whereas such data can be system data that is retained in memory element 424, referred to as system data storage 424. The OS instruction(s) 422 and system data storage 424 can be immediately accessible to and/or are presently operated on by at least one processor of the group of one or more processors 408. The OS instructions 422 can embody an operating system for the network node 410. Specific implementation of such OS can depend in part on architectural complexity of the network node 410. Higher complexity affords higher-level OSs. Example operating systems can include Unix, Linux, iOS, Windows operating system, and substantially any operating system for a computing device.

Memory 416 can comprise other removable/non-removable, volatile/non-volatile computer-readable non-transitory storage media. As an example, memory 516 can include a mass storage unit (not shown) which can provide non-volatile storage of computer code, computer readable instructions, data structures, program modules, and other data for the network node 410. A specific implementation of such mass storage unit (not shown) can depend on desired form factor of the network node 410, and space available for deployment of the network node 410. For suitable form factors and sizes of the monitoring device, the mass storage unit (not shown) can be a hard disk, a removable magnetic disk, a removable optical disk, magnetic cassettes or other magnetic storage devices, flash memory cards, CD-ROM, digital versatile disks (DVD) or other optical storage, random access memories (RAM), read only memories (ROM), electrically erasable programmable read-only memory (EEPROM), or the like.

Features of dynamic provisioning of communication resources in accordance with aspects described herein can be performed, at least in part, in response to execution of software components (e.g., one or more implementations of functionality instruction(s) 418) by a processor. In particular, yet not exclusively, to provide the specific functionality of network node 410, a processor of the group of one or more processors 408 in network node 410 can execute at least a portion of analysis instruction(s) 418, consuming data from or injecting data into analysis data storage 420 in accordance with aspects of the disclosure.

In general, a processor of the group of one or more processors 408 can refer to any computing processing unit or processing device comprising a single-core processor, a single-core processor with software multithread execution capability, multi-core processors, multi-core processors with software multithread execution capability, multi-core processors with hardware multithread technology, parallel platforms, and parallel platforms with distributed shared memory (e.g., a cache). In addition or in the alternative, a processor of the group of one or more processors 408 can refer to an integrated circuit with dedicated functionality, such as an application specific integrated circuit (ASIC), a digital signal processor (DSP), a field programmable gate array (FPGA), a complex programmable logic device (CPLD), a discrete gate or transistor logic, discrete hardware components, or any combination thereof designed to perform the functions described herein. In one aspect, processors referred to herein can exploit nano-scale architectures such as, molecular and quantum-dot based transistors, switches and gates, in order to optimize space usage (e.g., improve form factor) or enhance performance of the computing devices that can implement the various aspects of the disclosure. In another aspect, the one or more processors 408 can be implemented as a combination of computing processing units.

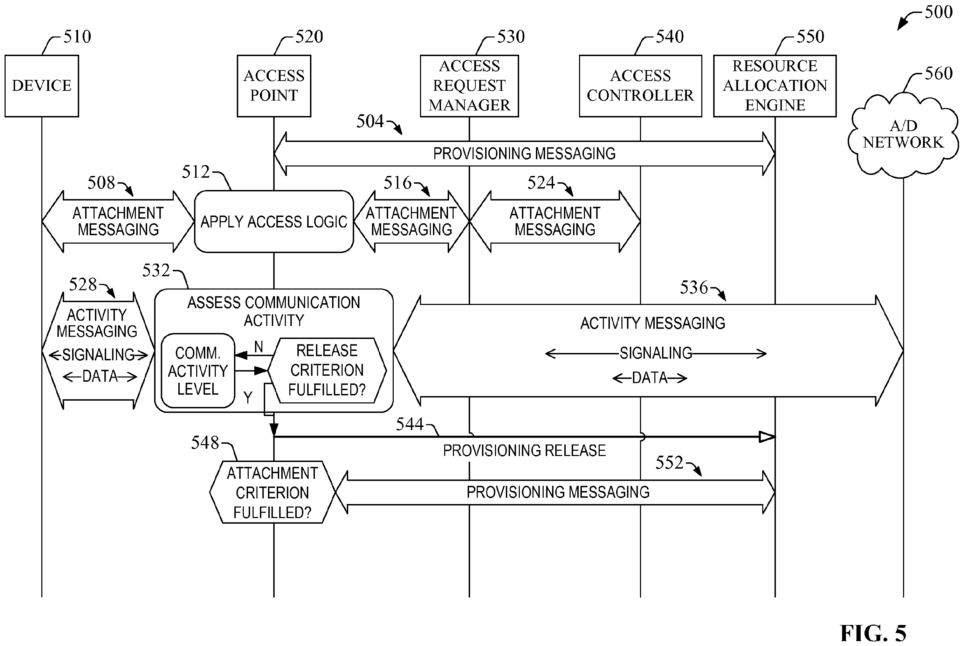

The one or more input/output (I/O) interfaces 404 can functionally couple (e.g., communicatively couple) network node 410 to another functional element (component, unit, server, gateway node, repository, etc.) of core network platform 120 or distribution platform 130, for example. Functionality of the network node 410 that is associated with data I/O or signaling I/O can be accomplished in response to execution, by a processor of the group of one or more processors 408, of at least one I/O interface retained in memory element 428. Such memory element is represented by the block I/O interface(s) 428. In some embodiments, the at least one I/O interface embodies an API that permits exchange of data or signaling, or both, via an I/O interface of I/O interface(s) 404. In certain embodiments, the one or more I/O interfaces 404 can include at least one port that can permit connection of the network node 410 to other functional element of the exemplary network environment 100. In one or more scenarios, the at least one port can comprise network adaptor(s) such as those present in reference links, and other network nodes. In other scenarios, the at least one port can include one or more of a parallel port (e.g., GPIB, IEEE-1284), a serial port (e.g., RS-232, universal serial bus (USB), FireWire or IEEE-1394), an Ethernet port, a V.35 port, or the like. The at least one I/O interface of the one or more I/O interfaces 404 can enable delivery of output (e.g., output data, output signaling) to such functional element. Such output can represent an outcome or a specific action of one or more actions described herein, such as in the methods of **FIGs. 5-8****.**

Bus 412 represents one or more of several types of bus structures, including a memory bus or memory controller, a peripheral bus, an accelerated graphics port, and a processor or local bus using any of a variety of bus architectures. As an example, such architectures can comprise an Industry Standard Architecture (ISA) bus, a Micro Channel Architecture (MCA) bus, an Enhanced ISA (EISA) bus, a Video Electronics Standards Association (VESA) local bus, an Accelerated Graphics Port (AGP) bus, a Peripheral Component Interconnects (PCI), a PCI-Express bus, a Personal Computer Memory Card Industry Association (PCMCIA), Universal Serial Bus (USB), and the like.

Architectures that permit dynamic reclamation of communication resources in a network, and features thereof, as described in the subject specification and annexed drawings, are not limited to the foregoing embodiment of the A/D network 110, the core network platform 120, the distribution platform 130, and the transport network 140. The disclosed features can be implemented and exploited in substantially any network environment that can provide a packet-switched, or otherwise digital, service.

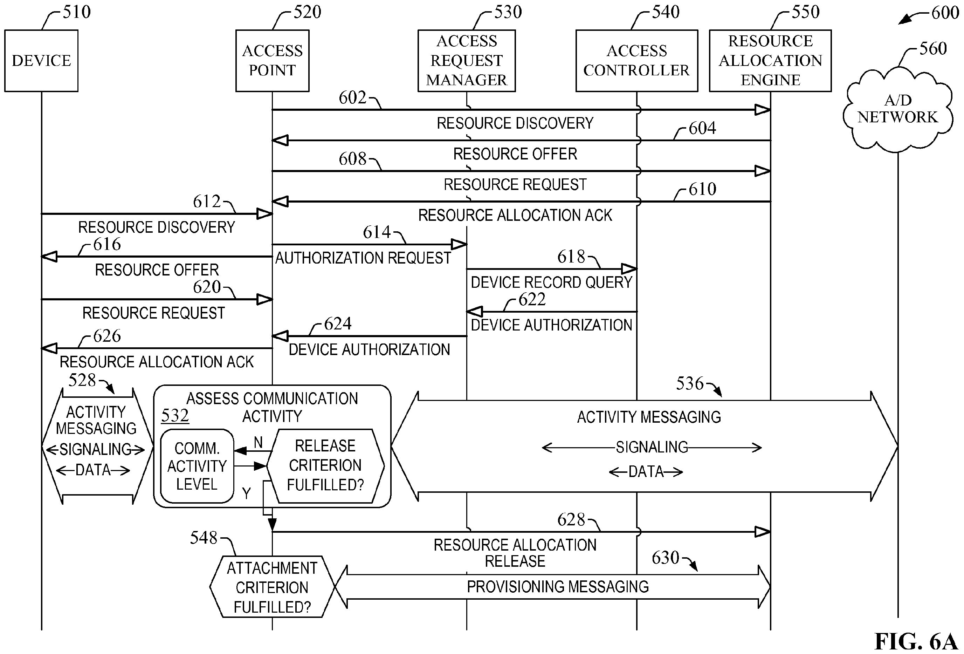

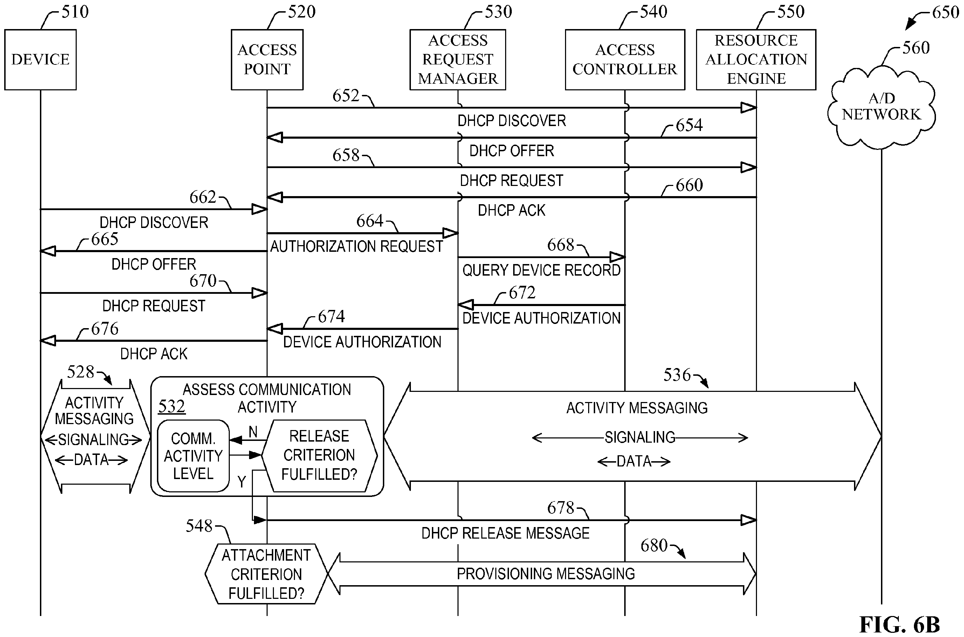

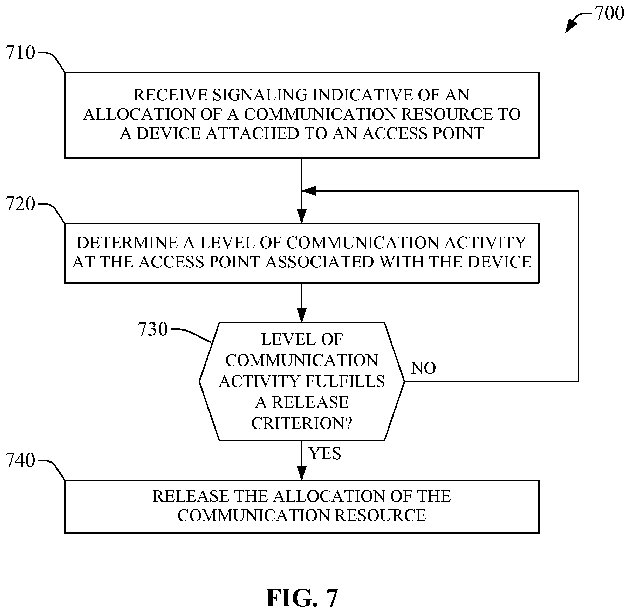

In view of the various aspects of network resource allocation, such as those described herein, exemplary methods that can be implemented in accordance with the disclosure can be better appreciated with reference to the call flows in **FIG. 5** and **FIGs. 6A****-6B** and the flowcharts in **FIGs. 7-8****.** For simplicity of explanation, the exemplary methods disclosed herein are presented and described as a series of actions (also referred to as steps), pictorially represented with a block or as delivered or received data or message(s). However, it is to be understood and appreciated that implementation, and related advantages, of such methods is not limited by the order of actions, as some actions may occur in different orders and/or concurrently with other actions from that shown and described herein. For example, the various methods (also referred to as processes) of the subject disclosure can alternatively be represented as a series of interrelated states or events, such as in a state diagram. Moreover, when disparate functional elements (network nodes, units, etc.) implement disparate portions of the methods of the subject disclosure, an interaction diagram or a call flow can represent such methods or processes. Furthermore, not all illustrated actions or messages may be required to implement a method in accordance with the subject disclosure. Further yet, in the illustrated call flows, messages related to routing the emergency communication are represented with an open-head arrow to pictorially indicate that one or more network components in addition to those illustrated as receiving a message can enable delivery and related reception of the message within the call flow.

The methods disclosed throughout the specification and annexed drawings can be stored on an article of manufacture, such as a computer-readable storage medium (e.g., a non-transitory medium), to facilitate transporting and transferring such methods to computing devices (e.g., desktop computers, mobile computers, mobile telephones, and the like) for execution, and thus implementation, by a processor or for storage in a memory.

**FIG. 5** is a call flow of an exemplary method 500 for dynamically allocating a network resource (e.g., a logical address, a one-way data stream, a two-way data stream, a signaling stream, combination thereof, or the like) according to at least certain aspects of the disclosure. In the illustrated embodiment, access point 520 can be provisioned by exchanging provisioning messaging 504 with resource allocation node (e.g., a DHCP engine). After the AP 520 is provisioned, a device 510 (which can be referred to as a user device 510 (e.g., a client device or client) and can be one of device(s) 160, for example) can attach to the AP 520. Attachment, as employed herein, refers to provisioning of the device 510 for service through, at least in part, the access point 520. It should be appreciated that the device 510 (e.g., a mobile device or a device with wireless functionality) is active prior to attachment to the AP 520.

To attach, the device 510 can exchange attachment signaling 508 with the AP 520. At block 512, the AP 520 can apply access logic 512 to at least a portion of the attachment signaling 508. In response to applying the access logic, the AP 520 can exchange attachment signaling 516 with access request manager node 530 (also referred to as access request manager 530), which can exchange attachment messaging 524 with access control node 540 (also referred to as access controller 540). The various attachment messaging groups can occur at different instants, and each of such groups can comprise a plurality of attachment messages, with each attachment message being exchanged at a specific instant. In a scenario in which application of access logic results in authorization for attachment being granted, device 510 can be allocated one or more network resources for communication with the access/delivery network 560. In such scenario, attachment messaging 508 can comprise an attachment message indicative of allocation of at least one of the one or more network resources.

After attachment to the AP 520, the device 510 can communicate with the A/D network 560 according to one or more packed-based communication protocols, such as TCP/IP, user datagram protocol (UDP), hypertext transfer protocol (HTTP), post office protocol (POP), or the like. Communication with the A/D network 560 can include delivery and reception of signaling and data (email communication, media content, encrypted credentials, etc.). Such communication can be embodied in activity messaging 528, which can be exchanged between the device 510 and the AP 520, and activity messaging 536, which can be exchanged between the AP 520 and the A/D network 560. While not shown, as described herein, the activity messaging 536 can be exchanged through one or more functional elements of a transport network (e.g., transport network 140), a distribution platform (e.g., distribution platform 130), and a core network platform (e.g., core network platform 120).

In one aspect, at block 532, the AP 520 can assess communication activity associated with the device 510. The AP 520 can determine a communication activity level and ascertain if the communication activity level fulfills a release criterion for de-allocation of the one or more resources allocated to the device 510 as part of attachment to the AP 520. In response to the release criterion being unfulfilled ("N" path in block 532), the AP 520 can continue assessing communication activity. In the alternative, in response to the release criterion being fulfilled ("Y" path in block 532), the AP 520 can transmit a provisioning release message 544 to the resource allocation engine 550. In one embodiment (e.g., embodiment 600) the provisioning release message 544 can be embodied in a resource allocation release message 628. The resource allocation engine 550 can release the one or more resources (e.g., a logical address) provisioned to the AP 520. In one embodiment, the resource allocation engine 550 can release a lease of an IP address provisioned to the AP 520. While illustrated as separate functional elements, the access request manager 530, the access controller 540, or the resource allocation engine 550 can be embodied in a single functional element, e.g., a single device. In certain embodiments, combinations of two of the access request manager 530, the access controller 540, or the resource allocation engine 550 can be embodied in a single device.

Release of the one or more resources can result in the device 510 being detached from the AP 520. After such deallocation, at block 548, the AP 520 can monitor signaling (not shown) received from the device 510 and determine if an attachment criterion is fulfilled. In the affirmative case, the AP 520 can exchange provisioning messaging 552 with the resource allocation engine 550, thereby restoring allocation of network resources for the AP 520.

**FIGs. 6A-6B** illustrate exemplary embodiments of exemplary methods for dynamically releasing allocated resources (e.g., communication resources, such as a logical address, a one-way data stream, a two-way data stream, a signaling stream, combination thereof, or the like) in a network in accordance with at least some aspects of the disclosure. Regarding exemplary embodiment 600, messages 602 through 610 embody provisioning messaging 504. Such message can be formatted according to one of various communication protocols, such as DHCP. In one aspect of provisioning, the access point 520 can transmit a resource discovery message 602 to resource allocation engine 550 which, in response, can transmit a resource offer message 604. In certain scenarios, the AP 520 can broadcast the resource discovery message 602. As illustrated in exemplary embodiment 650, the resource discovery message 602 and the resource offer message 604 can be embodied, respectively, in a DHCP Discover message 652 and a DHCP Offer message 654.

In response to receiving the resource offer message 604, the AP 520 can transmit a resource request message 608 to the resource allocation engine 550. In one aspect, the resource request message 608 can convey acceptance of one or more communication resources offered in the resource offer message 604. The resource allocation engine 550 can receive the resource offer message 604 and, in response, instantiate a specific allocation of resources comprising the one or more resources. Upon or after such instantiation, the resource allocation engine 550 can transmit a resource allocation acknowledgement (ACK) message 610 to the AP 520, to permit configuration of the AP 520 according to the one or more communication resources and complete provisioning. As illustrated in exemplary embodiment 650, the resource request message 608 and the resource allocation ACK message 660 can be embodied, respectively, in a DHCP Request message 652 and a DHCP ACK message 654.

With respect to attachment of the device 510 to the AP 520, messages 612 through 626 can embody the attachment messaging 508; messages 614 and 624 can embody the attachment messaging 516; and messages 618 and 622 can embody the attachment messaging 524. The device 510 can transmit a resource discovery message 612 to the access point 520. The AP 520 can apply access logic the resource discovery message 612, for example, the access logic can be applied to one or more identifiers associated with the device 510, wherein the one or more identifiers are conveyed in the resource discovery message 612. In response to outcome of the access logic being indicative of the device 510 being permitted to attach to the AP 520, the AP 520 can transmit an authorization request message 614 to an access request manager 530 and a resource offer message 616 to the device 510. As illustrated, the resource offer message 616 is transmitted after the access logic is applied and the device 510 is deemed allowed to attach to the AP 520. In response to receiving the resource request message 620, the device 510 can transmit a resource request message 620 to the AP 520.

In the illustrated embodiment, in response to receiving the authorization request message 614, the access request manager 530 can transmit a device record query 618 to the access controller 540. In response to such query, the access controller 540 can determine, for example, based at least on a policy, that the device 510 can access communication resources. Therefore, the access controller 540 can transmit a device authorization message 622 to the access request manager 530 which can relay the device authorization message. In one aspect, the access request manager 530 can operate (reformat, update, etc.) the device authorization message 622 and can deliver a resulting device authorization message 624. Reformatting the device authorization message 622 can permit more efficient communication among the access request manager 530 and the AP 520. The AP 520 transmits a resource allocation ACK message 626 to the device 510 in response to device authorization 624, and instantiates the one or more offered resources in accordance with the resource offer message 616. Such instantiation can complete attachment of the device 510 to the AP 520.

As described herein, in response to a communication activity level fulfilling a release criterion, the AP 520 can transmit a resource allocation release message 628 to the resource allocation engine 550. As illustrated in exemplary embodiment 650, the resource allocation release message 608 can be embodied in a DHCP Release message 678.

Provisioning messaging 630 can comprise messages can comprise a resource discovery message, a resource offer message, a resource request message, and a resource allocation ACK message, exchanged among the AP 520 and the resource allocation engine 550 in substantially the same manner as messages 602-610. Messages in provisioning messaging 630 can be compose according to the communication protocol employed to compose messages 602-610.

**FIG. 7** is a flowchart of exemplary method 700 for dynamically allocating and deallocating resources (e.g., communication resources) in accordance with at least certain aspects of the disclosure. The exemplary method 700 can be implemented (e.g., performed or executed) by an access point (such as AP 150 or AP 520) or a processor therein or functionally coupled thereto. At block 710, signaling indicative of an allocation of a communication resource (e.g., a logical address, such as an IP address) to a device (e.g., one of device(s) 160) attached (e.g., communicatively coupled) to the access point is received. As described herein, the access point can be a low-power access point that provides wireless service to one or more devices. In one embodiment, the signaling can originate from a network (e.g., core network platform 120) that can allocate the communication resource as part of provisioning the access point. For instance, a provisioning server, that can be part of the one or more servers 122, can transmit such signaling to the access point. At block 720, a level of communication activity at the access point associated with the device is determined. In one aspect, the communication activity can be associated with the device that is attached to the access point. The level of communication activity can be specific to an instant or a period of time. Accordingly, the level of communication can be referred to as a current level of communication activity.

At block 730, it is determined if the level of activity, such as communication activity, fulfills a release criterion, or reclamation criterion. The reclamation criterion can be a rule or a condition that establishes that the access point or the device attached thereto, or both, are in a non-servicing state-e.g., no substantive communication originates or terminates at either of such apparatuses. Block 730 can be referred to as the determining action. In one aspect, the determining action can comprise ascertaining that a communication link among the device (e.g., a end-user device) and the access point is operating. In another aspect, the determining action can comprise monitoring network traffic associated with the device, wherein the network traffic can be either directed to (or terminating at) the device or originated at the user device. Various communication metrics (e.g., key performance indicators (KPIs)) can be monitored. In one embodiment, the monitoring action can be performed by a dedicated component (e.g., monitor component 220) in the access point, and can comprise monitoring the network traffic periodically, according to a schedule, and/or in response to a predetermined event. As described herein, such schedule can be autonomously determined at the access point based at least on historical data associated with attachment of the device to the access point. In another embodiment, the monitoring action can comprise determining a metric indicative of a load of network traffic at the access point. As an example, the metric can be processing load of a processor (e.g., one of processor(s) 224) in the access point or functionally coupled thereto. As another example, the metric can be an amount or a rate of write/read operations associated with a memory (e.g., memory 228) that is part of the access point or functionally coupled thereto. In yet another embodiment, the monitoring action can comprise determining a size of a packet included in the network traffic.

In a scenario in which the level of communication does not fulfill the reclamation criterion, flow of the exemplary method 700 is returned to block 720 for further assessment of the current level of activity. In the alternative, in the affirmative case, the allocation of the communication resource can be released at block 740. Such block can be referred to as the releasing action. Therefore, in one aspect, in the embodiment referred to above, the communication resource (e.g., the logical address) can be reclaimed by the network that allocated such resource. In an embodiment in which the communication resource is a logical address, the releasing action can comprise releasing a lease of the logical address assigned to the device attached to the access point.

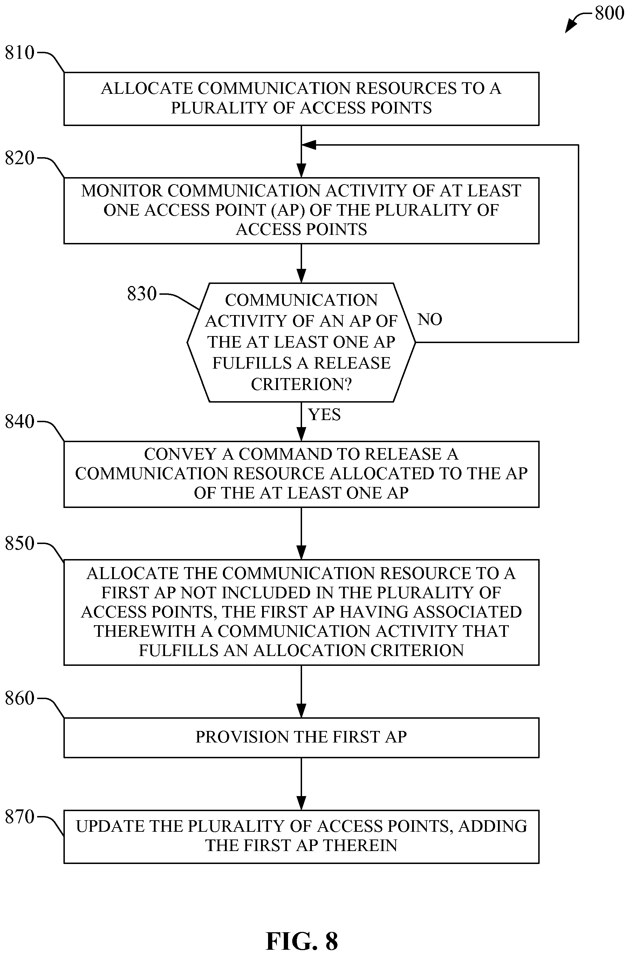

**FIG. 8** is a flowchart of an exemplary method 800 for dynamically provisioning an access point (e.g., AP 150) in accordance with at least one or more aspects of the disclosure. The exemplary method 800 can be implemented (e.g., performed or executed) by a network node (e.g., resource allocation engine 550) in a network platform (e.g., core network platform 120) functionally coupled to an access point (e.g., AP 150). In addition or in the alternative, a processor that is part of the network node or that is functionally coupled thereto can implement the exemplary method 800. At block 810, communication resources (e.g., logical addresses) can be allocated to a plurality of access points. In one aspect, the communication resources can be allocated from a finite set of one or more communication resources (also referred to as a pool of communication resources). Such an allocation can be retained, e.g., by the network node, in an allocation table that relates an allocated resource with an access point of the plurality of access points. At block 820, communication activity of at least one access point (one AP, two APs, more than two APs, all APs) of the plurality of access points can be monitored. At block 830, it is determined if the communication activity of an AP of the at least one AP fulfills a release criterion, or reclamation criterion. As described herein, the communication activity can be associated with a device attached (e.g., communicatively coupled) to the AP of the at least one AP. In the negative case, flow of the exemplary method 800 is directed to block 820. In the alternative, in the affirmative case, a command to release a communication resource allocated to the AP of the at least one AP is conveyed to the first AP at block 840. At block 850, the communication resource is allocated to a first access point not included in the plurality of access points. In one aspect, the first AP can be in service, presenting a communication activity that fulfills an allocation criterion, the communication activity being associated with a device attached to the first AP. The allocation criterion can establish an operation condition of an access point that warrants provisioning of such access point. At block 860, the first AP is provisioned. At block 870, the plurality of access points is updated to include the first AP. In certain embodiments, block 870 also can comprise updating the allocation table to reflect the allocation of the communication resource to the first AP.

Various advantages related to provisioning of communication resources in a network emerge from the foregoing disclosure. As an example, rather that statically preserving a provisioned communication resource, an appliance (e.g., an access point, such as a residential wireless gateway or an enterprise wireless gateway) can dynamically release the provisioned resource in response to a configurable reclamation criterion. Thus, in one aspect, the likelihood of exhausting a pool of finite communication resources (e.g., logical addresses) can be steeply mitigated or substantially avoided. As another example, the described dynamic release of provisioned communication resources can prolong satisfactory operation of a network operating with legacy protocols, which can significantly reduce operational cost for a service provider or multiple service operator that administers the such network.

One or more embodiments of the subject disclosure can employ artificial intelligence (AI) techniques such as machine learning and iterative learning. Examples of such techniques include, but are not limited to, expert systems, case based reasoning, Bayesian networks, behavior based AI, neural networks, fuzzy systems, evolutionary computation (e.g. genetic algorithms), swarm intelligence (e.g. ant algorithms), and hybrid intelligent systems (e.g. expert inference rules generated through a neural network or production rules from statistical learning).

While the systems, apparatuses, and methods have been described in connection with exemplary embodiments and specific examples, it is not intended that the scope be limited to the particular embodiments set forth, as the embodiments herein are intended in all respects to be illustrative rather than restrictive.

Unless otherwise expressly stated, it is in no way intended that any protocol, procedure, process, or method set forth herein be construed as requiring that its acts or steps be performed in a specific order. Accordingly, in the subject specification, where a description of a protocol, procedure, process, or method does not actually recite an order to be followed by its acts or steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; the number or type of embodiments described in the specification or annexed drawings, or the like.

It will be apparent that various modifications and variations can be made without departing from the scope of the subject disclosure. Other embodiments will be apparent from consideration of the specification and practice disclosed herein. It is intended that the specification and examples be considered as non-limiting illustrations only, with a true scope of the subject disclosure being indicated by the following claims.

## Claims

1. A method (700), comprising:
receiving (710), at an access point (150; 520) in a first network (140) from a provisioning server (122), an assignment of an internet protocol address to identify the access point (150) in the first network (140);
determining (720), by the access point (150; 520), a level of communication activity between the access point (150; 520) and a device (160; 510) provisioned by the access point (150; 520); and
releasing (740), by the access point (150; 520), the assignment of the internet protocol address in response to the level of communication activity fulfilling a specified criterion, wherein releasing (740), by the access point (150; 520), the assignment comprises transmitting a provisioning release message for releasing the internet protocol address to the provisioning server (122).

2. The method (700) of claim 1, wherein the access point (150; 520) is a low-power access point that provides wireless service.

3. The method (700) of claim 1, wherein the determining action (720) comprises ascertaining that a communication link between the access point (150; 520) and the device (160; 510) in wireless communication with the access point (150; 520) is active.

4. The method (700) of claim 1, wherein the determining action (720) comprises monitoring network traffic associated with the device (160; 510).

5. The method (700) of claim 4, wherein the monitoring action comprises monitoring the network traffic periodically or according to a schedule, wherein the schedule is autonomously determined at the access point (150; 520).

6. The method (700) of claim 4, wherein the monitoring action comprises determining a metric indicative of a load of the network traffic.

7. The method (700) of claim 4, wherein the monitoring action comprises determining a size of a packet included in the network traffic.

8. An apparatus (150; 520), comprising:
one or more processor (224); and
a memory (154) storing processor executable instructions that, when executed by the one or more processors (224), cause the apparatus (150; 520) to:
receive (710), from a provisioning server (122), an assignment of an internet protocol address to identify the apparatus (150; 520) in a first network;
determine (720) a level of communication activity between the apparatus (150; 520) and a device (160; 510) provisioned by the apparatus (150; 520); and
release (740) the assignment of the internet protocol address in response to the level of communication activity fulfilling a specified criterion by transmitting a provisioning release message for releasing the internet protocol address to the provisioning server (122).

9. The apparatus (150; 520) of claim 8, wherein the device (160; 510) is one of user equipment or customer premises equipment.

10. The apparatus (150; 520) of claim 8, wherein the processor executable instructions that, when executed by the one or more processors (224), cause the apparatus (150; 520) to determine (720) the level of communication activity between the apparatus (150) and the device (160; 510) further cause the apparatus (150; 520) to ascertain that a communication link between the apparatus (150; 520) and the device (160; 510) is active.

11. The apparatus (150; 520) of claim 8, wherein the specified criterion comprises a parameter indicative of the communication link being active.

12. The apparatus (150; 520) of claim 8, wherein the processor executable instructions that, when executed by the one or more processors (224), cause the apparatus (150; 520) to determine (720) the level of communication activity between the apparatus (150) and the device (160; 510) further cause the apparatus (150;520) to monitor network traffic associated with the device (160; 510).

13. The apparatus (150; 520) of claim 12, wherein the network traffic is a first packet-switched information stream directed to the device (160; 510) or a second packet-switched information stream originated at the device (160; 510).

14. The apparatus (150; 520) of claim 12, wherein the processor executable instructions that, when executed by the one or more processors (224), cause the apparatus (150; 520) to monitor the network traffic associated with the device (160; 510) further cause the apparatus (150; 520) to determine a metric indicative of a load associated with the network traffic.

15. The apparatus (150; 520) of claim 14, wherein the specified criterion comprises a threshold for the load of the network traffic.

16. The apparatus (150; 520) of claim 12, wherein the processor executable instructions that, when executed by the one or more processors (224), cause the apparatus (150; 520) to monitor the network traffic associated with the device (160; 510) further cause the apparatus (150; 520) to determine a size of a packet included in the network traffic.

17. The apparatus (150; 520) of claim 16, wherein the specified criterion comprises a threshold for the size of the packet.

18. The apparatus (150; 520) of claim 8, wherein the apparatus (150; 520) is a low-power access point that provides wireless service to a confined area spanning a region with dimensions nearly commensurate with dimensions of a structure having the low-power access point.

19. The apparatus (150; 520) of claim 8, wherein the apparatus (150; 520) is an indoor-based wireless access point.

20. The apparatus (150; 520) of claim 8, wherein the apparatus (150; 520) is an outdoor-based access point that provides wireless service to a confined area spanning a region with dimensions nearly commensurate with dimensions of a structure having the low-power access point.

## Patentansprüche

1. Verfahren (700), umfassend:
Empfangen (710) einer Zuweisung einer Internet-Protokolladresse bei einem Zugangspunkt (150; 520) in einem ersten Netzwerk (140) von einem Versorgungsserver (122), um den Zugangspunkt (150) in dem ersten Netzwerk (140) zu identifizieren;
Bestimmen (720) eines Niveaus von Kommunikationsaktivität zwischen dem Zugangspunkt (150; 520) und einer Vorrichtung (160; 510), welche durch den Zugangspunkt (150; 520) versorgt wird, durch den Zugangspunkt (150; 520); und
Freigeben (740) der Zuweisung der Internet-Protokolladresse durch den Zugangspunkt (150; 520) als Reaktion darauf, dass das Niveau von Kommunikationsaktivität ein spezifiziertes Kriterium erfüllt, wobei das Freigeben (740) der Zuweisung durch den Zugangspunkt (150; 520) ein Übertragen einer Versorgungs-Freigabenachricht zum Freigeben der Internet-Protokolladresse an den Versorgungsserver (122) umfasst.

2. Verfahren (700) nach Anspruch 1, wobei der Zugangspunkt (150; 520) ein Zugangspunkt mit niedriger Leistung ist, welcher einen drahtlosen Dienst bereitstellt.

3. Verfahren (700) nach Anspruch 1, wobei der Bestimmungsvorgang (720) ein Ermitteln umfasst, dass eine Kommunikationsverbindung zwischen dem Zugangspunkt (150; 520) und der Vorrichtung (160; 510) in drahtloser Kommunikation mit dem Zugangspunkt (150; 520) aktiv ist.

4. Verfahren (700) nach Anspruch 1, wobei der Bestimmungsvorgang (720) ein Überwachen von der Vorrichtung (160; 510) zugeordnetem Netzwerk-Traffic umfasst.

5. Verfahren (700) nach Anspruch 4, wobei der Überwachungsvorgang ein Überwachen des Netzwerk-Traffics in einer periodischen Weise oder gemäß einem Zeitplan umfasst, wobei der Zeitplan autonom an dem Zugangspunkt (150; 520) bestimmt wird.

6. Verfahren nach Anspruch 4, wobei der Überwachungsvorgang ein Bestimmen einer Metrik umfasst, welche eine Last des Netzwerk-Traffics anzeigt.

7. Verfahren (700) nach Anspruch 4, wobei der Überwachungsvorgang ein Bestimmen einer Größe eines Pakets umfasst, welches in dem Netzwerk-Traffic enthalten ist.

8. Einrichtung (150; 520), umfassend:
einen oder mehrere Prozessoren (224); und
einen Speicher (154), welcher prozessorausführbare Anweisungen speichert, welche wenn sie von dem einen oder den mehreren Prozessoren (224) ausgeführt werden, die Einrichtung (150; 520) dazu veranlassen:
von einem Versorgungsserver (122) eine Zuweisung einer Internet-Protokolladresse zu empfangen (710), um die Einrichtung (150; 520) in einem ersten Netzwerk zu identifizieren;
ein Niveau einer Kommunikationsaktivität zwischen der Einrichtung (150; 520) und einer Vorrichtung (160; 510) zu bestimmen (720), welche von der Einrichtung (150; 520) versorgt wird; und
die Zuweisung der Internet-Protokolladresse als Reaktion darauf freizugeben (740), dass das Niveau der Kommunikationsaktivität ein spezifiziertes Kriterium erfüllt, indem eine Versorgungs-Freigabenachrichtung zum Freigeben der Internet-Protokolladresse an den Versorgungsserver (122) übertragen wird.

9. Einrichtung (150; 520) nach Anspruch 8, wobei die Vorrichtung (160; 510) eine aus einer Benutzerausrüstung und einer Kunden-Heimausrüstung ist.

10. Einrichtung (150; 520) nach Anspruch 8, wobei die prozessorausführbaren Anweisungen, welche wenn sie von dem einen oder den mehreren Prozessoren (224) ausgeführt werden, die Einrichtung (150; 520) dazu veranlassen, das Niveau einer Kommunikationsaktivität zwischen der Einrichtung (150) und der Vorrichtung (160; 510) zu bestimmen (720), ferner die Einrichtung (150; 520) dazu veranlassen, zu ermitteln, dass eine Kommunikationsverbindung zwischen der Einrichtung (150; 520) und der Vorrichtung (160; 510) aktiv ist.

11. Einrichtung (150; 520) nach Anspruch 8, wobei das spezifizierte Kriterium einen Parameter umfasst, welcher anzeigt, dass die Kommunikationsverbindung aktiv ist.

12. Einrichtung (150; 520) nach Anspruch 8, wobei die prozessorausführbaren Anweisungen, welche wenn sie von dem einen oder den mehreren Prozessoren (224) ausgeführt werden, die Einrichtung (150; 520) dazu veranlassen, das Niveau einer Kommunikationsaktivität zwischen der Einrichtung (150) und der Vorrichtung (160; 510) zu bestimmen (720), ferner die Einrichtung (150; 520) veranlassen, einen der Vorrichtung (160; 510) zugeordneten Netzwerk-Traffic zu überwachen.

13. Einrichtung (150; 520) nach Anspruch 12, wobei der Netzwerk-Traffic ein erster paketgeschalteter Informationsstrom ist, welcher zu der Vorrichtung (160; 510) gerichtet ist, oder ein zweiter paketgeschalteter Informationsstrom, welcher von der Vorrichtung (160; 510) stammt.

14. Einrichtung (150; 520) nach Anspruch 12, wobei die prozessorausführbaren Anweisungen, welche wenn sie von dem einen oder den mehreren Prozessoren (224) ausgeführt werden, die Einrichtung (150; 520) dazu veranlassen, den der Vorrichtung (160; 510) zugeordneten Netzwerk-Traffic zu überwachen, ferner die Einrichtung (150; 520) dazu veranlassen, eine Metrik zu bestimmen, welche eine dem Netzwerk-Traffic zugeordnete Last anzeigt.

15. Einrichtung (150; 520) nach Anspruch 14, wobei das spezifizierte Kriterium einen Schwellenwert für die Last des Netzwerk-Traffics umfasst.

16. Einrichtung (150; 520) nach Anspruch 12, wobei die prozessorausführbaren Anweisungen, welche wenn sie von dem einen oder den mehreren Prozessoren (224) ausgeführt werden, die Einrichtung (150; 520) dazu veranlassen, den der Vorrichtung (160; 510) zugeordneten Netzwerk-Traffic zu überwachen, ferner die Einrichtung (150; 520) dazu veranlassen, eine Größe eines Pakets zu bestimmen, welches in dem Netzwerk-Traffic enthalten ist.

17. Einrichtung (150; 520) nach Anspruch 16, wobei das spezifizierte Kriterium einen Schwellenwert für die Größe des Pakets umfasst.

18. Einrichtung (150; 520) nach Anspruch 8, wobei die Einrichtung (150; 520) ein Zugangspunkt mit niedriger Leistung ist, welcher einen drahtlosen Dienst an einen beschränkten Bereich bereitstellt, welcher eine Region mit Abmessungen überspannt, welche nahezu mit Abmessungen einer Struktur übereinstimmen, welche den Zugangspunkt mit niedriger Leistung aufweist.

19. Einrichtung (150; 520) nach Anspruch 8, wobei die Einrichtung (150; 520) ein Innenraum-basierter drahtloser Zugangspunkt ist.

20. Einrichtung (150; 520) nach Anspruch 8, wobei die Einrichtung (150; 520) ein Außenraum-basierter Zugangspunkt ist, welcher einen drahtlosen Dienst an einen beschränkten Bereich bereitstellt, welcher eine Region mit Abmessungen überspannt, welche nahezu mit Abmessungen einer Struktur übereinstimmen, welche den Zugangspunkt mit niedriger Leistung aufweist.

## Revendications

1. Procédé (700) comprenant :
la réception (710), au niveau d'un point d'accès (150 ; 520) dans un premier réseau (140) à partir d'un serveur d'allocation (122), d'une attribution d'une adresse IP pour identifier le point d'accès (150) dans le premier réseau (140) ;
la détermination (720), par le point d'accès (150 ; 520), d'un niveau d'activité de communication entre le point d'accès (150 ; 520) et un dispositif (160 ; 510) alloué par le point d'accès (150 ; 520) ; et
la libération (740), par le point d'accès (150 ; 520), de l'attribution de l'adresse IP en réponse au niveau d'activité de communication satisfaisant un critère spécifié, dans lequel la libération (740), par le point d'accès (150 ; 520), de l'attribution comprend la transmission d'un message de libération d'allocation pour libérer l'adresse IP au serveur d'allocation (122).

2. Procédé (700) selon la revendication 1, dans lequel le point d'accès (150 ; 520) est un point d'accès à basse puissance qui fournit un service sans fil.

3. Procédé (700) selon la revendication 1, dans lequel l'action de détermination (720) comprend l'évaluation qu'une liaison de communication entre le point d'accès (150 ; 520) et le dispositif (160 ; 510) en communication sans fil avec le point d'accès (150 ; 520) est active.

4. Procédé (700) selon la revendication 1, dans lequel l'action de détermination (720) comprend la surveillance du trafic réseau associé au dispositif (160 ; 510).

5. Procédé (700) selon la revendication 4, dans lequel l'action de surveillance comprend la surveillance du trafic réseau périodiquement ou conformément à une planification, dans lequel la planification est déterminée de manière autonome au niveau du point d'accès (150 ; 520).

6. Procédé (700) selon la revendication 4, dans lequel l'action de surveillance comprend la détermination d'une métrique indicative d'une charge du trafic réseau.

7. Procédé (700) selon la revendication 4, dans lequel l'action de surveillance comprend la détermination d'une taille d'un paquet compris dans le trafic réseau.

8. Appareil (150 ; 520), comprenant :
un ou plusieurs processeurs (224) ; et
une mémoire (154) stockant des instructions exécutables par processeur qui, lorsqu'elles sont exécutées par lesdits un ou plusieurs processeurs (224), amènent l'appareil (150 ; 520) à :
recevoir (710), à partir d'un serveur d'allocation (122), une attribution d'une adresse IP pour identifier l'appareil (150 ; 520) dans un premier réseau ;
déterminer (720) un niveau d'activité de communication entre l'appareil (150 ; 520) et un dispositif (160 ; 510) alloué par l'appareil (150 ; 520) ; et
libérer (740) l'attribution de l'adresse IP en réponse au niveau d'activité de communication satisfaisant un critère spécifié par la transmission d'un message de libération d'allocation pour libérer l'adresse IP au serveur d'allocation (122).

9. Appareil (150 ; 520) selon la revendication 8, dans lequel le dispositif (160 ; 510) est l'un d'un équipement d'utilisateur ou d'un équipement des locaux d'abonné.

10. Appareil (150 ; 520) selon la revendication 8, dans lequel les instructions exécutables par processeur qui, lorsqu'elles sont exécutées par lesdits un ou plusieurs processeurs (224), amènent l'appareil (150 ; 520) à déterminer (720) le niveau d'activité de communication entre l'appareil (150) et le dispositif (160 ; 510), amènent en outre l'appareil (150 ; 520) à évaluer qu'une liaison de communication entre l'appareil (150 ; 520) et le dispositif (160 ; 510) est active.

11. Appareil (150 ; 520) selon la revendication 8, dans lequel le critère spécifié comprend un paramètre indicatif du fait que la liaison de communication est active.

12. Appareil (150 ; 520) selon la revendication 8, dans lequel les instructions exécutables par processeur qui, lorsqu'elles sont exécutées par lesdits un ou plusieurs processeurs (224), amènent l'appareil (150 ; 520) à déterminer (720) le niveau d'activité de communication entre l'appareil (150) et le dispositif (160 ; 510), amènent en outre l'appareil (150 ; 520) à surveiller un trafic réseau associé au dispositif (160 ; 510).

13. Appareil (150 ; 520) selon la revendication 12, dans lequel le trafic réseau est un premier flux d'informations à commutation de paquets dirigé vers le dispositif (160 ; 510) ou un second flux d'informations à commutation de paquets originaire du dispositif (160 ; 510).

14. Appareil (150 ; 520) selon la revendication 12, dans lequel les instructions exécutables par processeur qui, lorsqu'elles sont exécutées par lesdits un ou plusieurs processeurs (224), amènent l'appareil (150 ; 520) à surveiller le trafic réseau associé au dispositif (160 ; 510), amènent en outre l'appareil (150 ; 520) à déterminer une métrique indicative d'une charge associée au trafic réseau.

15. Appareil (150 ; 520) selon la revendication 14, dans lequel le critère spécifié comprend un seuil pour la charge du trafic réseau.

16. Appareil (150 ; 520) selon la revendication 12, dans lequel les instructions exécutables par processeur qui, lorsqu'elles sont exécutées par lesdits un ou plusieurs processeurs (224), amènent l'appareil (150 ; 520) à surveiller le trafic réseau associé au dispositif (160 ; 510), amènent en outre l'appareil (150 ; 520) à déterminer une taille d'un paquet compris dans le trafic réseau.

17. Appareil (150 ; 520) selon la revendication 16, dans lequel le critère spécifié comprend un seuil pour la taille du paquet.

18. Appareil (150; 520) selon la revendication 8, dans lequel l'appareil (150 ; 520) est un point d'accès à basse puissance qui fournit un service sans fil à une zone confinée couvrant une région ayant des dimensions presque comparables aux dimensions d'une structure possédant le point d'accès à basse puissance.

19. Appareil (150; 520) selon la revendication 8, dans lequel l'appareil (150 ; 520) est un point d'accès sans fil basé à l'intérieur.

20. Appareil (150; 520) selon la revendication 8, dans lequel l'appareil (150 ; 520) est un point d'accès basé à l'extérieur qui fournit un service sans fil à une zone confinée couvrant une région ayant des dimensions presque comparables aux dimensions d'une structure possédant le point d'accès à basse puissance.
